(19) Europäisches Patentamt
European Patent Office
Office européen des brevets

(11) **EP 4 559 177 B1**

(12) **EUROPEAN PATENT SPECIFICATION**

(45) Date of publication and mention
of the grant of the patent:
**15.07.2026  Bulletin 2026/29**

(21) Application number: **23751835.2**

(22) Date of filing: **20.07.2023**

(51) International Patent Classification (IPC):
***H04N 9/64*** *(2023.01)*      ***H04N 9/77*** *(2006.01)*

(52) Cooperative Patent Classification (CPC):
**H04N 9/64; H04N 9/77**

(86) International application number:
**PCT/US2023/070581**

(87) International publication number:
**WO 2024/020482 (25.01.2024 Gazette 2024/04)**

(54) **COLOR-GRADING CONTENT BASED ON SIMILARITY TO EXEMPLARS**

FARBABSTUFUNGSINHALT AUF DER BASIS VON ÄHNLICHKEIT ZU EXEMPLAREN

CONTENU À GRADATION DE COULEUR SUR LA BASE D'UNE SIMILARITÉ AVEC DES EXEMPLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.07.2022  US 202263391528 P
23.09.2022  EP 22197590**

(43) Date of publication of application:
**28.05.2025  Bulletin 2025/22**

(73) Proprietor: **Dolby Laboratories Licensing
Corporation
San Francisco, CA 94103 (US)**

(72) Inventor: **WARD, Gregory John
San Francisco, California 94103 (US)**

(74) Representative: **Dolby International AB
Patent Group Europe
77 Sir John Rogerson's Quay
Block C
Grand Canal Docklands
Dublin, D02 VK60 (IE)**

(56) References cited:
**EP-A1- 3 148 172     US-A1- 2013 141 647**

• NICOLAS BONNEEL ET AL: "Example-based
video color grading", ACM TRANSACTIONS ON
GRAPHICS, vol. 32, no. 4, 1 July 2013
(2013-07-01), pages 1, XP055162768, ISSN:
0730-0301, DOI: 10.1145/2461912.2461939
• XUE S ET AL: "Learning and Applying Color
Styles From Feature Films", COMPUTER
GRAPHICS FORUM : JOURNAL OF THE
EUROPEAN ASSOCIATION FOR COMPUTER
GRAPHICS, WILEY-BLACKWELL, OXFORD, vol.
32, no. 7, 25 November 2013 (2013-11-25), pages
255 - 264, XP071488753, ISSN: 0167-7055, DOI:
10.1111/CGF.12233

**Description**

CROSS-REFERENCE TO RELATED APPLICATIONS

This application claims priority to United States Provisional Patent Application No. 63/391,528, filed July 22, 2022, and European Patent Application 22197590.7, filed 23 September 2022.

FIELD OF THE DISCLOSURE

This application relates generally to systems and methods of image processing, image display, and image reproduction. Embodiments of the invention provide methods and apparatus which process image data to transform colors and/or tones for display or reproduction locally or at a downstream device. Some example embodiments are displays configured to receive and process image data and to display processed image data for viewing. N. Bonneel et al: "Example-based video color grading", published in ACM Transactions on Graphics, vol. 32, no. 4, on 1 July 2013 ISSN: 0730-0301 discloses colour grading transfer between video sequences based on representative frames.
Xue S, et al: "Learning and Applying Color Styles From Feature Films", published in Computer Graphics Forum: Journal of the European Association for Computer Graphics, vol. 32, no. 7, pages 255-263, on 25 November 2013 discloses learning colour styles from movies and grading of movies based on the learned styles.

SUMMARY

The invention is defined by the independent claims. Dependent claims concern optional features of some embodiments of the invention. Embodiments described herein relate to systems and methods for color grading of images and video based on similarity to exemplars. In preparation for color-grading new content, exemplar frames related to the expected new content may be obtained and color grading parameters for the exemplar frames may be obtained. To color grade the new content as it is created or received, similarities between frames of the new content and the exemplar frames may be determined. The similarities between frames of the new content and the exemplar frames may be combined with the obtained color-grading parameters from the exemplar frames to determine suitable color-grading parameters to apply to the new content. The new content may then be color-graded using the determined color-grading parameters
In one exemplary aspect of the present disclosure, there is provided a method for color-grading a source image using a plurality of color-grading operations. The method includes obtaining a source image for color-grading; obtaining, in association with each example frame from a plurality of example frames, a plurality of color-grading parameter settings, where each color-grading parameter setting serves as an input parameter for an associated color-grading operation out of the plurality of color-grading operations; obtaining a plurality of similarity measurements, each similarity measurement indicating a level of similarity between the source image and a different respective example frame from the plurality of example frames; obtaining a plurality of weighted averages based on the similarity measurements and the plurality of color-grading parameters, where each weighted average is associated with a different respective color-grading operation out of the plurality of color-grading operations; applying, to produce a color-graded image, the plurality of color-grading operations to the source image using each of the weighted averages as an input parameter to its associated color-grading operation; and providing the color-graded image.
In another exemplary aspect of the present disclosure, there is provided a color-grading system that includes at least one controller configured to obtain a source image for color-grading; obtain a plurality of color-grading parameter settings, where each color-grading parameter setting serves as an input to a color-grading operation and where each color-grading parameter setting is associated with a different respective example frame from a plurality of example frames; calculate a plurality of similarity measurements, each similarity measurement indicating a level of similarity between the source image and a different respective example frame from the plurality of example frames; calculate a weighted average based on the plurality of similarity measurements and the plurality of color-grading parameter settings; apply, to produce a color-graded image, the color-grading operation to the source image using the weighted average as an input parameter to the color-grading operation; and provide the color-graded image.
In another exemplary aspect of the present disclosure, there is provided a method that includes obtaining a sequence of image frames; obtaining a plurality of similarity measurements, each similarity measurement indicating a level of similarity between a different respective pair of image frames from the sequence of image frames; and selecting, from the sequence of image frames, a set of exemplar frames, by (i) adding, to the set of exemplar frames, a first image frame from the sequence of image frames; (ii) identifying, from among the image frames not yet added to the set of exemplar frames, which image frame is the least similar, according to the similarity measurements, to the image frame(s) in the set of exemplar frames; (iii) adding, to the set of exemplar frames, the image frame identified in (ii); and (iv) repeating (ii) and (iii) until a completion condition is satisfied.
Some or all of the operations, functions and/or methods described herein may be performed by one or more devices according to instructions (e.g., software) stored on one or more non-transitory media. Such non-transitory media may include memory devices such as those described herein, including but not limited to random access memory (RAM) devices, read-only memory (ROM) devices, etc. Accordingly, some innovative aspects of the subject matter described in this disclosure can be implemented via one or more non-transitory media having software stored thereon.

At least some aspects of the present disclosure may be implemented via an apparatus. For example, one or more devices may be capable of performing, at least in part, the methods disclosed herein. In some implementations, an apparatus is, or includes, an audio processing system having an interface system and a control system. The control system may include one or more general purpose single- or multi-chip processors, digital signal processors (DSPs), application specific integrated circuits (ASICs), field programmable gate arrays (FPGAs) or other programmable logic devices, discrete gates or transistor logic, discrete hardware components, or combinations thereof.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

DESCRIPTION OF THE DRAWINGS

These and other more detailed and specific features of various embodiments are more fully disclosed in the following description, reference being had to the accompanying drawings, in which:

FIG. 1 depicts an example process for image encoding and decoding pipelines.
FIG. 2 depicts an example process for an imaging encoding pipeline.
FIG. 3 depicts an example process for identifying exemplar frames.

DETAILED DESCRIPTION

This disclosure and aspects thereof can be embodied in various forms, including hardware, devices or circuits controlled by computer-implemented methods, computer program products, computer systems and networks, user interfaces, and application programming interfaces; as well as hardware-implemented methods, signal processing circuits, memory arrays, application specific integrated circuits (ASICs), field programmable gate arrays (FPGAs), and the like. The foregoing is intended solely to give a general idea of various aspects of the present disclosure, and does not limit the scope of the disclosure in any way.

In the following description, numerous details are set forth, such as optical device configurations, timings, operations, and the like, in order to provide an understanding of one or more aspects of the present disclosure. It will be readily apparent to one skilled in the art that these specific details are merely exemplary and not intended to limit the scope of this application.

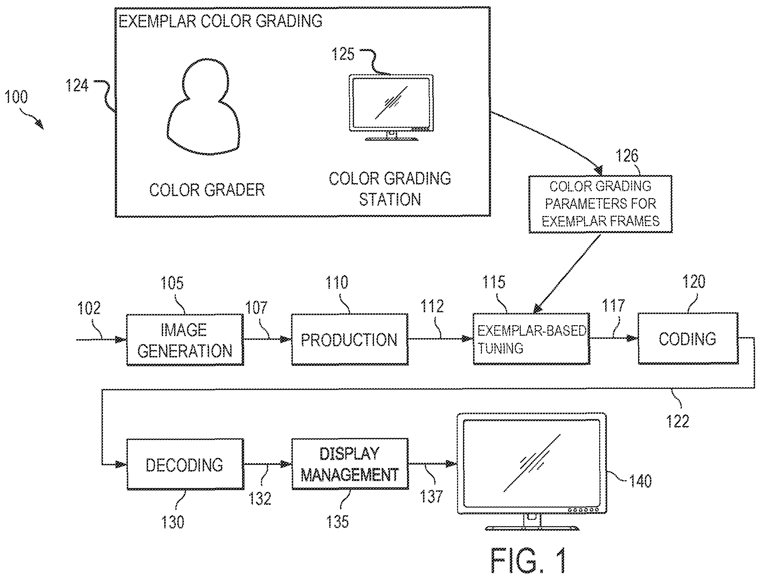

FIG. 1 depicts an example process of an image delivery pipeline (100) showing various stages from image capture to image content display. An image (102), which may include a sequence of video frames (102), is captured or generated using image generation block (105). Image (102) may be digitally captured (e.g., by a digital camera) or generated by a computer (e.g., using computer animation) to provide image data (107). Alternatively, image (102) may be captured on film by a film camera. The film is converted to a digital format to provide image data (107). In a production phase (110), image data (107) is edited to provide an image production stream (112).

The image data of production stream (112) is then provided to a processor (or one or more processors such as a central processing unit (CPU)) at block (115) for exemplar-based color grading (e.g., real-time production editing). Block (115) exemplar-based color grading may include adjusting or modifying colors or brightness in an image to enhance the image quality or achieve a particular appearance for the image in accordance with the image creator's creative intent. This is sometimes called "color timing" or "color grading." Methods described herein may be performed by the processor at block (115). The image data from exemplar-based color grading (115) yields a final version (117) of the production for distribution.

Exemplar-based color grading (115) and pipeline (100) of FIG. 1 may be configured for delivering live content where dynamic conditions produce unpredictable imagery, such as in live broadcasts, gaming content, virtual reality content, and the like. When delivering such live content, it is generally not possible for a creative artist or other user to manually color grade each image frame (to enhance the image quality or achieve a particular appearance for the image in accordance with the image creator's creative intent). For example, while the creative artist could provide a single set of color-grading parameters or adjustments to apply to all image frames, fixed color-grading adjustments would be ill-suited to the changing conditions of live content.

Exemplar-based color grading (115) leverages predetermined color grading parameters for exemplar frames (126) to a range of unknown future views and conditions, enabling the color-grading of live content. As an example, an image creator can, as part of exemplar color grading (124), obtain past live content (e.g., a prior live broadcast, a clip of gaming content, a clip of virtual reality content, etc.), identify exemplar frames from the past live content, and provide their artistic input using color grading station (125) to manually color-grade the exemplar frames. Then, when new live content is being processed through exemplar-based color grading (115) and pipeline (100), frames of the live content can be compared for similarities to the manually color-graded exemplar frames. The new frames can then be automatically color-graded, by transferring the image creator's color-grading of the exemplar frames to the new frames, based on similarities between the new frames and the color-graded exemplar frames. In this manner, exemplar-based color grading (115) and pipeline (100) of FIG. 1 can color-grade live content in real-time or near real-time, despite the somewhat unpredictable nature of live content.

In some embodiments, the color grading operations applied in exemplar-based color grading (115) and exemplar-based color grading (124) may include operations whose effect on the image output is roughly monotonic. A color grading operation may be roughly monotonic when changes in a particular direction of the setting for that operation also move the output in a particular direction, without doubling back. As a particular example, a brightness control with a range of settings from 0 to 1 should not make the image brightest at a setting of 0.5, but should instead always increase brightness as the setting is increased from 0 to 1. Examples of color grading operations that may be applied in exemplar-based color grading (115) and exemplar-based color grading (124) include, but are not limited to, adjustments to ambient color temperature, contrast, luminance, hue, color-saturation, highlights, shadows, white clipping, black clipping, slope (multiplying brightness and/or one or more chromaticity channels by a factor), offset (adding an offset to brightness and/or one or more chromaticity channels), etc.

Following exemplar-based color grading (115), image data of final production (117) may be delivered to encoding block (120) for delivering downstream to decoding and playback devices such as computer monitors, television sets, set-top boxes, movie theaters, and the like. In some embodiments, coding block (120) may include audio and video encoders, such as those defined by ATSC, DVB, DVD, Blu-Ray, and other delivery formats, to generate coded bit stream (122). In a receiver, the coded bit stream (122) is decoded by decoding unit (130) to generate a decoded signal (132) representing an identical or close approximation of signal (117). The receiver may be attached to a target display (140) which may have unique characteristics. In that case, a display management block (135) may be used to map the dynamic range of decoded signal (132) to the characteristics of the target display (140) by generating display-mapped signal (137). Additional methods described herein may be performed by the decoding unit (130) or the display management block (135). Both the decoding unit (130) and the display management block (135) may include their own processor or may be integrated into a single processing unit. While the present disclosure refers to a target display (140), it will be understood that this is merely an example. It will further be understood that the target display (140) can include any device configured to display or project light; for example, computer displays, televisions, OLED displays, LCD displays, quantum dot displays, cinema, consumer, and other commercial projection systems, heads-up displays, virtual reality displays, and the like.

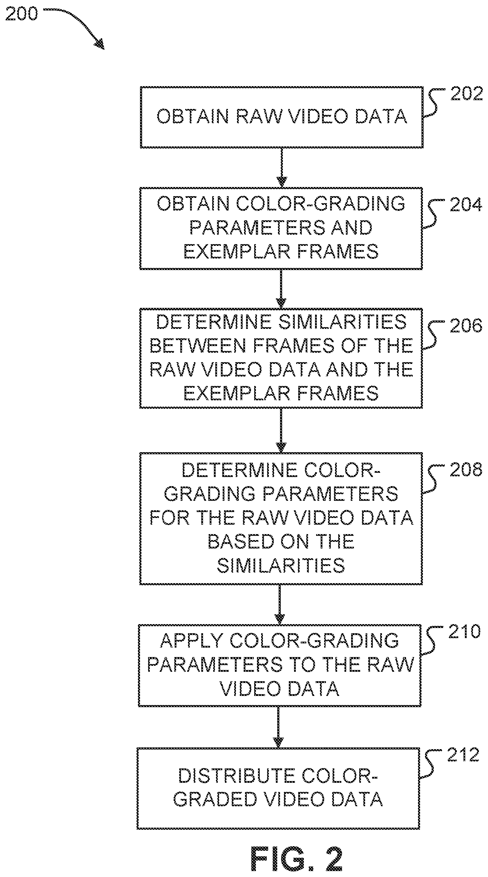

FIG. 2 provides a method (200) to allow for color grading based on similarity to exemplar frames. The method (200) may be performed by, for example, the processor as part of block (115) and/or block (120) for encoding.

At step (202), raw video (or image) data is obtained. The raw video (or image) data may, as examples, be live content such as live broadcasts, gaming content, virtual reality content, and the like.

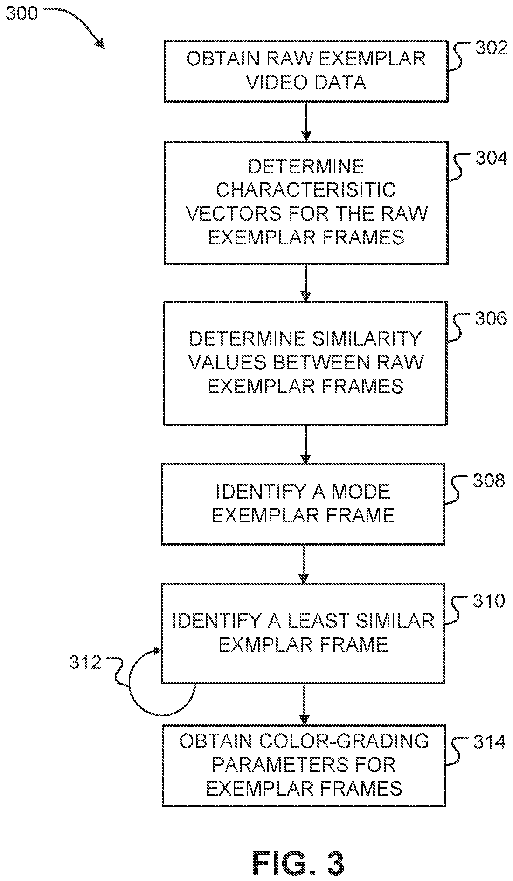

At step (204), exemplar frames and pre-determined color-grading parameters are obtained. The exemplar frames may be frames from historical live content. In some embodiments, the exemplar frames are selected according to the method (300) of FIG. 3. In some embodiments, the pre-determined color-grading parameters are obtained through a color grading station, such as station (125) of FIG. 1, and as part of the method (300) of FIG. 3. Step (204) may involve obtaining a plurality of exemplar frames and, for each exemplar frame, one or more color grading parameters (which may also be referred to as color grading parameter settings or color grading settings). The color grading parameters obtained in step (204) may include any color grading parameters that are adjustable via color grading station (125) or another color grading device.

At step (206), the method may involve determining similarities between frames of the raw video (or image) obtained in step (202) and the exemplar frames obtained in step (204). In some embodiments, a characteristic vector may be computed for each image frame obtained in step (202) and for each exemplar frame obtained in step (204). The characteristic vectors for raw video data may be computed in real-time or, when dealing with recorded rather than live content, may be computed any time before step (206). The characteristic vectors for the exemplar frames may be computed during step (204) or as part of the operations of method (300) of FIG. 3, as examples. The characteristic vectors may be used in determining the similarities between frames of raw video (or an image) and the exemplar frames obtained in step (204). The characteristic vector for each frame may include, as examples, non-zero bin counts in a 3-D histogram binning value populations in a preferred color space, plus averages and standard deviations for brightness in a predetermined number of horizontal zones partitioned from top to bottom in the frame.

Step (206) may include computing a 3-D histogram for some, or each, of the image frames obtained from steps (204 and 206). Each 3-D histogram may include bins that divide an initial luminance range into down-sampled ranges and that divides chromaticity parameters (such as the u' and v' parameters of the CIE, International Commission on Illumination) into down-sampled ranges. As an example, image frames encoded with a perceptual quantizer based on Society of Motion Picture and Television Engineers ST.2084 (SMPTE 2084) may initially have a luminance range of 0 - 10,000 cd/m$^2$ encoded with 10 to 16 bits and may have a pair of chromaticity parameters, each encoded with 10 to 16 bits. As part of calculating the characteristic vectors the initial luminance range may be divided into a limited number of ranges, such as 16 luminance bins (e.g., a 4 bit depth) and each chromaticity parameter may similarly be divided into a limited number of ranges, such as 8 chromaticity parameter ranges (e.g., a 3 bit depth). The divided luminance ranges may each be sized so that each spans a relatively similar perceptual difference. In other words, if the brightest value in a given divided luminance range had a perceptual brightness approximately double the dimmest value in that same luminance range, it may desirable for the remaining luminance ranges to also have brightest values with a perceptual brightness approximately double their dimmest value. As an example, step (206) may include populating a 3-D histogram for some, or all, of the image frames obtained from steps (204 and 206), where a first dimension of the histogram relates to luminance, a second dimension relates to a first chromaticity parameter (e.g., u'), and a third dimension relates to a second chromaticity parameter (e.g., v'). Each dimension may include any desired number of bins. As an example, there may be 16 bins (e.g., 16 distinct luminance ranges) in the luminance dimension, 8 bins (e.g., 8 distinct ranges of u') in in the first chromacity dimension, and 8 bins (e.g., 8 distinct ranges of v') in the second chromaticity dimension.

Computing a 3-D histogram for a given image frame, such as one of the image frames obtained from steps (204 and 206), may include counting the number pixels in the given image associated with each bin of the 3-D histogram. In other words, if a given bin in the 3-D histogram covers a luminance range, a chromaticity range in the first chromaticity dimension, and a given chromaticity range in the second chromaticity dimension and the image frame at issue includes X pixels that fall within all three independent ranges of that given bin, then the given bin may be assigned a value of X.

In some embodiments, the resolution of image frames may be downsampled as part of calculating their characteristic vectors, which may reduce the processing load of calculating characteristic vectors. As an example, image frames may be downsampled to a resolution of 100 by 100 pixels, 150 by 150 pixels, 180 by 180 pixels, 200 by 200 pixels, 250 by 250 pixels, or another desired resolution. Down-sampling of the image frames may be done with, or without, maintaining an initial aspect ratio of the image frames. In such embodiments, the pixel counts in the 3-D histogram may be based on a down-sampled versions of the image frames.

Step (206) may also include computing averages and standard deviations for brightness in a predetermined number of horizontal zones partitioned from top to bottom in the subject frame. As an example, computing the characteristic vector for a given image frame may involve dividing that given image frame into a predetermined number of horizontal zones, then computing the average brightness of each horizontal zone and the standard deviation of brightness of each horizontal zone. For example, each of the horizontal zones may span the entire width of the subject frame while spanning a respective fraction of the vertical dimension. The horizontal zones may, if desired, have similar or identical sizes (e.g., each horizontal zone may span a similar or identical fraction of the vertical dimension) or may have different sizes. As example, a central horizontal zone may have a larger, or smaller, vertical span than another horizontal zone below or above that central horizonal zone. The horizontal zones may partially overlap, may about each other with no overlap or vertical gap, or may be separated by a vertical gap. As examples, the predetermined number of horizonal zones may be three horizontal zones, four horizontal zones, five horizontal zones, six horizontal zones, seven horizontal zones, eight horizontal zones, nine horizontal zones, ten horizonal zones, or more than ten horizontal zones. If desired, the calculations for averages and standard deviations for brightness in a predetermined number of horizontal zones may be performed after downsampling the original image (as discussed above).

Step (206) may also include comparing the characteristic vectors of the raw video frames with the characteristic vectors of the exemplar frames. As an example, the characteristic vector of some or each raw video frame may be compared to the characteristic vectors of the exemplar frames. Determining the similarity of the characteristic vector for a raw video frame with the characteristic vector for an exemplar frame may include comparing the 3-D histogram bin populations of the two image frames and comparing the average and standard deviation of brightness across the aforementioned horizontal zones, then combining those two comparisons.

Comparing the 3-D histogram bin populations of two image frames may involve, as an example, calculating a sum of overlap in the 3-D histogram bin populations of the two image frames. As a specific example, if a given 3-D histogram bin has a non-zero value of X for a given raw video frame and a non-zero value of Y for a given exemplar frame, then the lesser value of X and Y may be added to a sum indicative of similarity between the frames. Such a calculation may be repeated for some or all of the 3-D histogram bins, until a final sum of overlap in the 3-D histograms is obtained. If the two 3-D histograms are identical, the total will equal 100% (1.0). If there is no overlap in the two 3-D histograms, the total will be 0% (0.0). Most frames will have some pixels in common, so will be between these two extremes and so will have a final normalized similarity in 3-D histogram bin populations in the range of 0.0 to 1.0.

Comparing the average and standard deviation of brightness across the aforementioned horizontal zones may involve, as an example, computing the normal distribution overlap between the mean and standard deviations of each of the horizontal zones of the two image frames being compared. The normal distribution overlap between the matching horizontal zones of the two images frames may be a real value in the range of 0.0 to 1.0. In some embodiments, the normal distribution overlaps of different horizontal zones may be averaged together to yield an overall matching value also in the range of 0.0 to 1.0. If desired, the lowest horizontal zones may have a first weighting ($W_1$), the second lowest horizontal zones may have a second weighting ($W_2$), the central horizontal zones may have a second weighting ($W_3$), the second uppermost horizontal zones may have a fourth weighting ($W_4$), and the uppermost horizontal zones may have a fifth weighting ($W_5$), where some or all the weightings may be unique. In some embodiments, the weighting ($W_3$) of the central horizontal zones may be greater than the weighting of other horizontal zones. Computing the normal distribution overlap of the horizontal zones of two image frames may, as an example, involve calculating a weighted average of the normal distribution overlaps of each of the horizontal zones.

The outputs of the 3-D histogram bin comparison and the normal distribution overlap of the horizontal zones may be combined together using any desired weighting factors. As an example, the two measures may be combined with an equal ½ weighting. In some embodiments, the two measures may be combined with unequal weightings (e.g., the 3-D histogram bin comparison may be given a higher or lower weighting than the normal distribution overlap). In some embodiments, the output of the 3-D histogram bin comparison includes a similarity value in the range of 0.0 to 1.0 and the normal distribution overlap of the horizontal zones also includes a similarity value in the range of 0.0 to 1.0. When these two comparison metrics are aggregated with an equal ½ weighting, the final similarity value between a given raw frame and a given exemplar frame may also have a range of 0.0 to 1.0.

At step (208), the similarity values between the one or more raw frames and the exemplar frames and the pre-determined color-grading parameters obtained in step (204) which are associated with the exemplar frames may be combined to determine color-grading parameters for the raw frames. In some embodiments, the similarity values obtained in step (206) may be used to assign weights for the pre-determined color grading parameters associated with the exemplar frames. If a raw frame is exactly the same as an exemplar frame (e.g., has a similarity value of 1.0), then the set of pre-determined color grading parameters of that exemplar frame may have a maximum weighting. In contrast, if a raw frame and an exemplar frame have a similarity value of 0.0, then the set of pre-determined color grading parameters of that exemplar frame may have a zero weighting. In some embodiments, the weights of pre-determined color grading parameters from an exemplar frame $j$ for application to a raw frame $i$ may be calculated using equation (1).

$$\mathrm{w}(i,j) = \mathrm{s}(i,j) \,/\, [\mathrm{K_S} - \mathrm{s}(i,j)] \qquad\qquad (1)$$

In equation (1), $\mathrm{w}(i,j)$ may represent the weight for raw frame $i$ relative to exemplar frame $j$, $\mathrm{s}(i,j)$ may represent the similarity between raw frame $i$ and exemplar frame $j$, and $K_S$ may be a pre-determined constant value, which may be greater than 1.0. In sone embodiment, $K_S$ may have a value of 1.05, which yields a maximum weighting of 20. Other formulas to convert the similarity values to weights may be used in place of formula (1).

As discussed above, there may be M characteristic vectors (one for each of M exemplar image frames) and each characteristic vector may have an associated set of between 1 and N tone-mapping parameter settings. Some characteristic vectors (e.g., some exemplar images) may be associated with tone-mapping parameter settings for all N possible tone-mapping operations, while other characteristic vectors (e.g., other exemplar images) may be associated with tone-mapping parameters settings for less than the N possible tone-mapping operations and may be associated with as few as a single tone-mapping parameter setting for a single tone-mapping operation out of the N possible tone-mapping operations. As a new raw image frame arrives (e.g., in step (302)), the new raw image frame may be optionally downsampled and its characteristic vector computed. The characteristic vector of the new raw image frame is then compared to each of the M characteristic vectors of the exemplar frames, to arrive at M similarity values. The M similarity values may, if desired, be converted into M weights (e.g., using formula (1) above). Then, as part of step (208), N color-grading parameters for N tone-mapping operations for the new raw image frame may be determined using the M weights (or the M similarity values). In some embodiments, each of the N tone-mapping parameters for the new raw image frame may be calculated using a weighted average. As one example, the N tone-mapping parameters for the new raw image frame may be calculated using the weighted average of equation (2).

$$\mathrm{p}(k,i) = [\Sigma_j\, \mathrm{p}(k,j)\, \mathrm{w}(i,j)] \,/\, \Sigma_j\, \mathrm{w}(i,j) \qquad\qquad (2)$$

In equation (2), $p(k,i)$ represents the parameter setting for tone-mapping operation $k$ to apply to new frame $i$, $\mathrm{p}(k,j)$ represents the parameter setting for tone-mapping operation $k$ that was applied to the exemplar frame $j$, and $\mathrm{w}(i,j)$ represents the weight for raw frame $i$ relative to exemplar frame $j$ (as discussed in connection with equation (1)). In some embodiments, only exemplars that have provided or associated settings for the $k^{th}$ tone-mapping operation are used in the weighted average of equation (2). In situations where there are no non-zero weights for a specified tone-mapping operation (e.g., there are no exemplars having both a provided setting for the $k^{th}$ tone-mapping operation and a non-zero weighting relative to the new frame), the method may instead assign a global default value for the $k^{th}$ tone-mapping operation. Content creators may provide global default values for any desired number of the N possible tone-mapping operations.

At step (210), each of the tone-mapping operations N may be applied to the raw video frame, where each tone-mapping operation is applied using its associated parameter setting determined in step (208). In this manner, tone-mapping operations can be applied to raw video frames in real-time without requiring manual review or inputs from a color grader. At step (212), the color-graded video frames may be distributed for use and/or storage.

FIG. 3 provides a method (300) for identifying exemplar frames and obtaining color-grading parameters for those exemplar frames, for use in method (200) of FIG. 2. The method (300) may be performed by, for example, the processor as part of block (124) and/or block (126). A content creator may have access to a past live broadcast or sample gameplay footage (e.g., a set of possible exemplar frames), but it may be undesirable for the content creator to individually color grade every single possible exemplar frame. The method (300) may be one example of a method for narrowing down the set of possible exemplar frames into a more limited and still appropriate set of exemplar frames for individual color grading. As an example, it may be desirable for the individually color graded exemplar frames to be a manageable number, while also being as distinct as possible to cover the widest range of possible future raw video inputs.

At step (302), raw exemplar video data may be obtained, where the raw exemplar video contains X possible exemplar frames. The raw exemplar video data may be associated with the future raw video that is to be color graded. As an example, if the raw video to be color graded is a future broadcast of a sports event, then step (302) may involve obtaining past broadcasts of similar sports events (e.g., prior matches at the same location, at similar times of day, etc.). As another example, if the raw video to be color graded is gaming content from a particular game, then step (302) may involve obtaining sample content from that particular game.

At step (304), characteristic vectors for some or all of the raw exemplar video frames may be calculated, where the characteristic vectors may be calculated as described in step (206) of method (300).

At step (306), similarity values between the characteristic vectors and their associated raw exemplar video frames may be calculated (e.g., as described in step (206)). If desired, step (306) may involve populating a symmetric matrix with a 1.0 diagonal (e.g., the similarity of each frame to itself) otherwise indicating the similarity values between the characteristic vectors and their associated raw exemplar video frames.

At step (308), a mode exemplar frame may be identified and selected as the first exemplar frame in a set of M final exemplar frames. As an example, step (308) may involve finding which row of the symmetric matrix has the largest sum, which indicates the most average frame (e.g., mode) of the raw exemplar video frames.

At step (310), a frame having the smallest maximum similarity to the exemplar frame(s) in the set of final exemplar frames may be identified, and then added to the set of final exemplar frames. As an example, step (310) may involve identifying which row in the symmetric matrix has the smallest maximum value (excluding the 1.0 diagonal) and the exemplar frame associated with that row may be added to the set of final exemplar frames.

As indicated by loop (312), step (310) may be repeated until an end condition is reached. Examples of potential end conditions include, but are not limited to, reaching a predetermined number (M) of final exemplar frames and the candidate identified in step (310) having a similarity to a prior entry in the set of final exemplar frames greater than a predetermined threshold. As an example, if the frame identified in step (310) as having the smallest maximum similarity to the exemplar frame(s) in the set of final exemplar frames has a maximum similarity of at least 0.7 to a frame already in the set of final exemplar frames, method (300) may cease loop (312) and the finally-identified frame may or may not be added to the set of final exemplar frames.

At step (314), color-grading parameters for the exemplar frames identified in step (310) may be obtained. The color-grading parameters may be obtained, as an example, by a color grader using color grading station (125). In particular, a color grader may provide inputs via a control interface of a color grading station. If desired, step (310) and/or step (314) may also involve receiving user input to remove one or more exemplar frames from the set of final exemplar frames identified in step (310). In particular, method (300) may identify some exemplar frames that are not particularly useful for color grading, such as frames during a fading transition, completely black frames, etc. It should generally be easier to exclude such frames from the smaller set of exemplar frames identified in step (310) than from the original raw exemplar frames obtained in step (302).

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments incorporate more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1. A computer-implemented method for color-grading a source image using a plurality of color-grading operations, the method comprising:

   obtaining a source image for color-grading;
   obtaining, in association with each exemplar frame from a set of exemplar frames, a plurality of color-grading parameter settings, wherein each color-grading parameter setting serves as an input parameter for an associated color-grading operation out of the plurality of color-grading operations;
   obtaining, for each exemplar frame from the set of exemplar frames, a similarity measurement indicating a level of similarity between the source image and the respective exemplar frame;
   obtaining, for each exemplar frame from the set of exemplar frames, weighted color-grading parameter settings by applying a weight to each color-grading parameter setting of the respective exemplar frame, wherein the weight is based on the similarity measurement of the respective exemplar frame;
   obtaining, for each color-grading operation of the plurality of color-grading operations, an average of the weighted color-grading parameter settings associated with the respective color-grading operation over the set of exemplar frames;
   applying, to produce a color-graded image, the plurality of color-grading operations to the source image using each of the averages of the weighted color-grading parameter settings as an input parameter to its associated color-grading operation; and
   providing the color-graded image.

2. The method of claim 1, being configured in at least one of the following ways:

   wherein the plurality of color-grading operations comprises a luminance adjustment operation, a hue adjustment operation, and a saturation adjustment operation;
   wherein the plurality of color-grading operations comprises a global luminance adjustment operation, a global hue adjustment operation, and a global saturation adjustment operation; or
   wherein the plurality of color-grading operations comprises at least one regional luminance adjustment operation, at least one regional hue adjustment operation, and at least one regional saturation adjustment operation.

3. The method of claim 1 or 2, being configured in at least one of the following ways:
   wherein obtaining the plurality of similarity measurements comprises:

   calculating a plurality of data structures, wherein each data structure is associated with a different one of the source image and the exemplar frames from the set of exemplar frames and wherein each data structure has a plurality of bins, each bin being associated with a unique range of chromaticity values and a unique range of luminance values and each bin including a count of the number of pixels in the image associated with that data structure that have chromaticity values in the range of chromaticity values associated with that bin and that also have luminance values in the range of luminance values associated with that bin;
   wherein each exemplar frame from the set of exemplar frames and the source image are encoded with a transfer function that covers a luminance range of X nits in Y bit depth and wherein the bins of the data structures cover the luminance range of X nits in Z bit depth, where Z is no more than half of Y;
   wherein each exemplar frame from the set of exemplar frames and the source image are encoded with a transfer function with chromaticity values that cover a given color space in Y bit depth and wherein the bins of the data structures cover the given color space in Z bit depth, where Z is more than half of Y;
wherein calculating the plurality of data structures further comprises down-sampling the source image prior to computing the data structure associated with the source image and down-sampling the exemplar frames from the set of exemplar frames prior to computing the data structures associated with the source image;
wherein obtaining the plurality of similarity measurements further comprises identifying overlaps between the data structure associated with the source image and the data structures associated with the exemplar frames; or
wherein obtaining the plurality of similarity measurements further comprises:

identifying overlaps between the data structure associated with the source image and the data structures associated with the exemplar frames;
dividing each exemplar frame from the set of exemplar frames and the source image into a plurality of horizontal bands;
obtaining averages and standard deviations of luminance within each of the horizontal bands;
computing overlaps of normal distributions of the obtained averages and standard deviations of luminance within each of the horizontal bands; and
calculating the similarity measurements by combining a first metric based on the identified overlaps between the data structure associated with the source image and the data structures associated with the exemplar frames together with a second metric based on the computed overlaps of normal distributions.

4. The method of any one of claims 1 to 3, wherein obtaining the plurality of similarity measurements further comprises:

dividing each exemplar frame from the set of exemplar frames and the source image into a plurality of horizontal bands;
obtaining averages and standard deviations of luminance within each of the horizontal bands; and
computing overlaps of normal distributions of the obtained averages and standard deviations of luminance within each of the horizontal bands.

5. The method of any one of claims 1 to 4, further comprising determining the set of exemplar frames, the determining comprising:

obtaining a sequence of image frames;
obtaining a plurality of similarity measurements, each similarity measurement indicating a level of similarity between a different respective pair of image frames from the sequence of image frames; and
selecting, from the sequence of image frames, a set of exemplar frames, by:

(i) adding, to the set of exemplar frames, a first image frame from the sequence of image frames;
(ii) identifying, from among the image frames not yet added to the set of exemplar frames, which image frame is the least similar, according to the similarity measurements, to the image frame(s) in the set of exemplar frames;
(iii) adding, to the set of exemplar frames, the image frame identified in (ii); and
(iv) repeating (ii) and (iii) until a completion condition is satisfied;

wherein the plurality of color-grading parameter settings for each exemplar frame in the set of exemplar frames is obtained after the completion condition is satisfied.

6. The method of claim 5, being configured in at least one of the following ways:

wherein repeating (ii) and (iii) until the completion condition is satisfied comprises repeating (ii) and (iii) until there is at least a predetermined number of exemplar frames added to the set of exemplar frames;
wherein repeating (ii) and (iii) until the completion condition is satisfied comprises repeating (ii) and (iii) until the image frame identified in (ii) has a similarity measurement with an image frame already added to the set of exemplar frames that is greater than a predetermined threshold;
wherein adding, to the set of exemplar frames, the first image frame from the sequence of image frames comprises adding, to the set of exemplar frames, a randomly selected frame from the sequence of image frames;
wherein adding, to the set of exemplar frames, the first image frame from the sequence of image frames comprises adding, to the set of exemplar frames, a most average frame from the sequence of image frames; or
wherein (ii) identifying, from among the image frames not yet added to the set of exemplar frames, which image frame is the least similar, according to the similarity measurements, to the image frame(s) in the set of exemplar frames comprises identifying, from among the image frames not yet added to the set of exemplar frames, which image frame has the smallest maximum similarity relative to any of the image frame(s) in the set of exemplar frames.

7. The method of claim 5 or 6, wherein obtaining the plurality of similarity measurements comprises computing a characteristic vector for each image frame in the sequence of image frames.

8. The method of claim 7, wherein computing the characteristic vector of a given image frame comprises:

down-sampling the given image to produce a down-sampled image having a lower resolution than the given image; and
computing an average brightness and a standard deviation of the brightness for a plurality of horizontal zones of the down-sampled image.

9. The method of claim 7, wherein the image frames are encoded with a transfer function having a luminance range that is encoded with X bits and having at least two chromacity parameters each encoded with Y bits and wherein computing the characteristic vector of a given image frame comprises:

down-sampling the given image to produce a down-sampled image having a lower resolution than the given image;
computing an average brightness and a standard deviation of the brightness for a plurality of horizontal zones of the down-sampled image; and
computing a data structure from the down-sampled image, wherein the data structure includes a plurality of bins, wherein the luminance range of the transfer function is encoded with A bits in the data structure, wherein the at least two chromacity parameters are encoded with B bits in the data structure, wherein A is less than X and B is less than Y, and wherein computing the data structure comprises counting the number of pixels from the down-sampled image associated with each bin.

10. The method of claim 5, further comprising:

obtaining a source image for color-grading;
calculating a plurality of additional similarity measurements, each additional similarity measurement indicating a level of similarity between the source image and a different respective exemplar frame from the set of exemplar frames;
calculating a weighted average based on the plurality of similarity measurements and the color-grading parameter settings associated with the exemplar frames in the set of exemplar frames;
applying, to produce a color-graded image, the color-grading operation to the source image using the weighted average as an input parameter to the color-grading operation; and providing the color-graded image.

11. A computer program product having instructions that, when executed by a computing system, cause said computing system to execute the method of any one of claims 1 to 10.

12. A color-grading system comprising:
at least one controller configured to perform the method of any one of claims 1 to 10.

13. The system of claim 12, further comprising a display, wherein the at least one controller is configured to provide the color-graded image to the display and wherein the display is configured to display the color-graded image.

14. The system of claim 13, wherein the source image comprises live content and wherein the at least one controller is configured to provide the color-graded image to the display within 200 milliseconds of obtaining the source image.

15. The system of any one of claims 12 to 14, wherein the at least one controller is configured to obtain the plurality of color-grading parameter settings prior to creation of the source image.

**Patentansprüche**

1. Computerimplementiertes Verfahren zur Farbkorrektur eines Quellbildes unter Verwendung einer Vielzahl von Farbkorrekturoperationen, wobei das Verfahren Folgendes umfasst:

Erlangen eines Quellbildes für die Farbkorrektur;
Erlangen einer Vielzahl von Farbkorrekturparameter-Einstellungen in Verknüpfung mit jedem Beispielbild aus einem Satz von Beispielbildern, wobei jede Farbkorrekturparameter-Einstellung als ein Eingabeparameter für eine zugehörige Farbkorrekturoperation aus der Vielzahl von Farbkorrekturoperationen dient;
Ermitteln eines Ähnlichkeitsmaßes für jedes Beispielbild aus dem Satz von Beispielbildern, das einen Grad der Ähnlichkeit zwischen dem Quellbild und dem jeweiligen Beispielbild angibt;
Erlangen von gewichteten Farbkorrekturparameter-Einstellungen für jedes Beispielbild aus dem Satz von Beispielbildern durch Anwenden eines Gewichts auf jede Farbkorrekturparameter-Einstellung des jeweiligen Beispielbildes, wobei das Gewicht auf dem Ähnlichkeitsmaß des jeweiligen Beispielbildes beruht;
Erlangen eines Mittelwerts der gewichteten Farbkorrekturparameter-Einstellungen, die mit der jeweiligen Farbkorrekturoperation verknüpft sind, über den Satz von Beispielbildern für jede Farbkorrekturoperation aus der Vielzahl der Farbkorrekturvorgänge;
Anwenden der Vielzahl von Farbkorrekturoperationen auf das Quellbild unter Verwendung jedes der Mittelwerte der gewichteten Farbkorrekturparameter-Einstellungen als ein Eingabeparameter für seine zugehörige Farbkorrekturoperation, um ein farbkorrigiertes Bild zu erzeugen; und
Bereitstellen des farbkorrigierten Bildes.

2. Verfahren nach Anspruch 1, das auf mindestens eine der folgenden Weisen konfiguriert ist:

wobei die Vielzahl von Farbkorrekturoperationen eine Luminanzanpassungsoperation, eine Farbtonanpassungsoperation und eine Sättigungsanpassungsoperation umfasst;
wobei die Vielzahl von Farbkorrekturoperationen eine globale Luminanzanpassungsoperation, eine globale Farbtonanpassungsoperation und eine globale Sättigungsanpassungsoperation umfasst oder
wobei die Vielzahl von Farbkorrekturoperationen mindestens eine regionale Luminanzanpassungsoperation, mindestens eine regionale Farbtonanpassungsoperation und mindestens eine regionale Sättigungsanpassungsoperation umfasst.

3. Verfahren nach Anspruch 1 oder 2, das auf mindestens eine der folgenden Weisen konfiguriert ist:

wobei das Erlangen der Vielzahl von Ähnlichkeitsmaßen Folgendes umfasst:
Berechnen einer Vielzahl von Datenstrukturen, wobei jede Datenstruktur mit einem unterschiedlichen von dem Quellbild und den Beispielbildern aus dem Satz von Beispielbildern verknüpft ist und wobei jede Datenstruktur eine Vielzahl von Bins aufweist, wobei jeder Bin mit einem eindeutigen Bereich von Chromatizitätswerten und einem eindeutigen Bereich von Luminanzwerten verknüpft ist und jeder Bin eine Zählung der Anzahl von Pixeln im Bild einschließt, die mit dieser Datenstruktur verknüpft sind, die Chromatizitätswerte im Bereich der mit diesem Bin verknüpften Chromatizitätswerte aufweisen und die ebenfalls Luminanzwerte im Bereich der mit diesem Bin verknüpften Luminanzwerte aufweisen;
wobei jedes Beispielbild aus dem Satz von Beispielbildern und das Quellbild mit einer Übertragungsfunktion codiert werden, die einen Luminanzbereich von X Nits in Y Bittiefe abdeckt, und wobei die Bins der Datenstrukturen den Luminanzbereich von X Nits in Z Bittiefe abdecken, wobei Z nicht mehr als die Hälfte von Y beträgt;
wobei jedes Beispielbild aus dem Satz von Beispielbildern und das Quellbild mit einer Übertragungsfunktion mit Chromatizitätswerten codiert werden, die einen gegebenen Farbraum in Y Bittiefe abdecken, und wobei die Bins der Datenstrukturen den gegebenen Farbraum in Z Bittiefe abdecken, wobei Z mehr als die Hälfte von Y beträgt;
wobei das Berechnen der Vielzahl von Datenstrukturen weiter das Herunterskalieren des Quellbildes vor dem Berechnen der mit dem Quellbild verknüpften Datenstruktur und das Herunterskalieren der Beispielbilder aus dem Satz von Beispielbildern vor dem Berechnen der mit dem Quellbild verknüpften Datenstrukturen umfasst;
wobei das Erlangen der Vielzahl von Ähnlichkeitsmaßen weiter das Identifizieren von Überlappungen zwischen der mit dem Quellbild verknüpften Datenstruktur und den mit den Beispielbildern verknüpften Datenstrukturen umfasst oder
wobei das Erlangen der Vielzahl von Ähnlichkeitsmaßen weiter Folgendes umfasst:

Identifizieren von Überlappungen zwischen der mit dem Quellbild verknüpften Datenstruktur und den mit den Beispielbildern verknüpften Datenstrukturen;
Aufteilen jedes Beispielbildes aus dem Satz von Beispielbildern und des Quellbildes in eine Vielzahl von horizontalen Streifen;
Erlangen von Mittelwerten und Standardabweichungen der Luminanz innerhalb jedes der horizontalen Bänder;

Berechnen von Überlappungen von Normalverteilungen der erlangten Mittelwerte und Standardabweichungen der Luminanz innerhalb jedes der horizontalen Bänder und

Berechnen der Ähnlichkeitsmaßen durch Kombinieren einer ersten Metrik, die auf den identifizierten Überlappungen zwischen der mit dem Quellbild verknüpften Datenstruktur und den mit den Beispielbildern verknüpften Datenstrukturen beruht, zusammen mit einer zweiten Metrik, die auf den berechneten Überlappungen von Normalverteilungen beruht.

4. Verfahren nach einem der Ansprüche 1 bis 3, wobei das Erlangen der Vielzahl von Ähnlichkeitsmaßen weiter Folgendes umfasst:

Aufteilen jedes Beispielbildes aus dem Satz von Beispielbildern und des Quellbildes in eine Vielzahl von horizontalen Streifen;

Erlangen von Mittelwerten und Standardabweichungen der Luminanz innerhalb jedes der horizontalen Bänder; und

Berechnen von Überlappungen von Normalverteilungen der erlangten Mittelwerte und Standardabweichungen der Luminanz innerhalb jedes der horizontalen Bänder.

5. Verfahren nach einem der Ansprüche 1 bis 4, weiter umfassend das Bestimmen des Satzes von Beispielbildern, wobei das Bestimmen Folgendes umfasst:

Erlangen einer Sequenz von Einzelbildern;

Erlangen einer Vielzahl von Ähnlichkeitsmaßen, wobei jede Ähnlichkeitsmaß einen Grad der Ähnlichkeit zwischen einem unterschiedlichen jeweiligen Paar von Einzelbildern aus der Sequenz von Einzelbildern angibt; und

Auswählen eines Satzes von Beispielbildern aus der Sequenz von Einzelbildern durch:

(i) Hinzufügen eines ersten Bildes aus der Sequenz von Einzelbildern zu dem Satz von Beispielbildern;

(ii) Identifizieren, aus den noch nicht zu dem Satz von Beispielbildern hinzugefügten Einzelbildern, welches Einzelbild nach den Ähnlichkeitsmaßen das dem/den Einzelbild(ern) in dem Satz von Beispielbildern am wenigsten ähnliche ist;

(iii) Hinzufügen des in (ii) identifizierten Einzelbilds zu dem Satz von Beispielbildern; und

(iv) Wiederholen von (ii) und (iii), bis eine Abschlussbedingung erfüllt ist;

wobei die Vielzahl von Farbkorrekturparameter-Einstellungen für jedes Beispielbild im Satz von Beispielbildern erlangt wird, nachdem die Abschlussbedingung erfüllt ist.

6. Verfahren nach Anspruch 5, das auf mindestens eine der folgenden Weisen konfiguriert ist:

wobei das Wiederholen von (ii) und (iii), bis die Abschlussbedingung erfüllt ist, das Wiederholen von (ii) und (iii) umfasst, bis dem Satz von Beispielbildern mindestens eine vorbestimmte Anzahl von Beispielbildern hinzugefügt ist;

wobei das Wiederholen von (ii) und (iii), bis die Abschlussbedingung erfüllt ist, das Wiederholen von (ii) und (iii) umfasst, bis das in (ii) identifizierte Einzelbild eine Ähnlichkeitsmaß mit einem dem Satz von Beispielbildern bereits hinzugefügten Einzelbild aufweist, die größer als ein vorbestimmter Schwellenwert ist;

wobei das Hinzufügen des ersten Bildes aus der Sequenz von Einzelbildern zu dem Satz von Beispielbildern das Hinzufügen eines zufällig ausgewählten Bildes aus der Sequenz von Einzelbildern zu dem Satz von Beispielbildern umfasst;

wobei das Hinzufügen des ersten Bildes aus der Sequenz von Einzelbildern zu dem Satz von Beispielbildern das Hinzufügen eines am meisten durchschnittlichen Bildes aus der Sequenz von Einzelbildern zu dem Satz von Beispielbildern umfasst; oder

wobei (ii) das Identifizieren, aus den noch nicht zu dem Satz von Beispielbildern hinzugefügten Einzelbildern, welches Einzelbild nach den Ähnlichkeitsmaßen das dem/den Einzelbild(ern) in dem Satz von Beispielbildern am wenigsten ähnliche ist, das Identifizieren, aus den noch nicht zu dem Satz von Beispielbildern hinzugefügten Einzelbildern, welches Einzelbild die kleinste maximale Ähnlichkeit im Verhältnis zu einem von dem/den Einzelbild(ern) in dem Satz von Beispielbildern aufweist, umfasst.

7. Verfahren nach Anspruch 5 oder 6, wobei das Erlangen der Vielzahl von Ähnlichkeitsmaßen das Berechnen eines charakteristischen Vektors für jedes Einzelbild in der Sequenz von Einzelbildern umfasst.

8. Verfahren nach Anspruch 7, wobei das Berechnen des charakteristischen Vektors eines gegebenen Einzelbilds Folgendes umfasst:

Herunterskalieren des gegebenen Bildes, um ein herunterskaliertes Bild zu erzeugen, das eine geringere Auflösung aufweist als das gegebene Bild; und

Berechnen einer durchschnittlichen Helligkeit und einer Standardabweichung der Helligkeit für eine Vielzahl von horizontalen Zonen des herunterskalierten Bildes.

9. Verfahren nach Anspruch 7, wobei die Einzelbilder mit einer Übertragungsfunktion codiert sind, die einen Luminanzbereich aufweist, der mit X Bits codiert ist, und mindestens zwei Farbparameter aufweist, die jeweils mit Y Bits codiert sind, und wobei das Berechnen des charakteristischen Vektors eines gegebenen Einzelbildes Folgendes umfasst:

Herunterskalieren des gegebenen Bildes, um ein herunterskaliertes Bild zu erzeugen, das eine geringere Auflösung aufweist als das gegebene Bild;

Berechnen einer durchschnittlichen Helligkeit und einer Standardabweichung der Helligkeit für eine Vielzahl von horizontalen Zonen des herunterskalierten Bildes und

Berechnen einer Datenstruktur aus dem herunterskalierten Bild, wobei die Datenstruktur eine Vielzahl von Bins einschließt, wobei der Luminanzbereich der Übertragungsfunktion mit A Bits in der Datenstruktur codiert ist, wobei die mindestens zwei Chromatizitätsparameter mit B Bits in der Datenstruktur codiert sind, wobei A kleiner als X ist und B kleiner als Y ist, und wobei das Berechnen der Datenstruktur das Zählen der Anzahl von Pixeln aus dem mit jedem Bin verknüpften heruntergerechneten Bild umfasst.

10. Verfahren nach Anspruch 5, weiter umfassend:

Erlangen eines Quellbildes für die Farbkorrektur;

Berechnen einer Vielzahl zusätzlicher Ähnlichkeitsmaße, wobei jedes zusätzliche Ähnlichkeitsmaß einen Grad der Ähnlichkeit zwischen dem Quellbild und einem unterschiedlichen jeweiligen Beispielbild aus dem Satz von Beispielbildern angibt;

Berechnen eines gewichteten Mittelwerts auf Grundlage der Vielzahl von Ähnlichkeitsmaßen und der Farbkorrekturparameter-Einstellungen, die mit den Beispielbildern im Satz von Beispielbildern verknüpft sind;

Anwenden der Farbkorrekturoperation auf das Quellbild, um ein farbkorrigiertes Bild zu erzeugen, unter Verwendung des gewichteten Mittelwerts als ein Eingabeparameter für die Farbkorrekturoperation; und Bereitstellen des farbkorrigierten Bildes.

11. Computerprogrammprodukt, das Anweisungen aufweist, die, wenn sie von einem Computersystem ausgeführt werden, das Computersystem veranlassen, das Verfahren nach einem der Ansprüche 1 bis 10 auszuführen.

12. Farbkorrektursystem, umfassend:
mindestens eine Steuereinheit, die so konfiguriert ist, dass sie das Verfahren nach einem der Ansprüche 1 bis 10 durchführt.

13. System nach Anspruch 12, weiter umfassend eine Anzeige, wobei die mindestens eine Steuereinheit so konfiguriert ist, dass sie das farbkorrigierte Bild an die Anzeige liefert und wobei die Anzeige so konfiguriert ist, dass sie das farbkorrigierte Bild anzeigt.

14. System nach Anspruch 13, wobei das Quellbild Live-Inhalt umfasst und wobei die mindestens eine Steuereinheit so konfiguriert ist, dass sie das farbkorrigierte Bild innerhalb von 200 Millisekunden nach dem Empfang des Quellbildes an die Anzeige liefert.

15. System nach einem der Ansprüche 12 bis 14, wobei die mindestens eine Steuereinheit so konfiguriert ist, dass sie die Vielzahl von Farbkorrekturparameter-Einstellungen vor dem Erstellen des Quellbildes erlangt.

**Revendications**

1. Procédé mis en œuvre par ordinateur pour l'étalonnage des couleurs d'une image source en utilisant une pluralité d'opérations d'étalonnage des couleurs, le procédé comprenant :

   l'obtention d'une image source pour l'étalonnage des couleurs ;

   l'obtention, en association avec chaque trame exemplaire d'un ensemble de trames exemplaires, d'une pluralité de réglages de paramètres d'étalonnage des couleurs, dans lequel chaque réglage de paramètre d'étalonnage des couleurs sert de paramètre d'entrée pour une opération d'étalonnage des couleurs associée parmi la pluralité d'opérations d'étalonnage des couleurs ;

   l'obtention, pour chaque trame exemplaire de l'ensemble de trames exemplaires, d'une mesure de similarité indiquant un niveau de similarité entre l'image source et la trame exemplaire respective ;

   l'obtention, pour chaque trame exemplaire de l'ensemble de trames exemplaires, de réglages de paramètres d'étalonnage des couleurs pondérés en appliquant un poids à chaque réglage de paramètre d'étalonnage des couleurs de la trame exemplaire respective, dans lequel le poids est basé sur la mesure de similarité de la trame exemplaire respective ;

   l'obtention, pour chaque opération d'étalonnage des couleurs de la pluralité d'opérations d'étalonnage des couleurs, d'une moyenne des réglages de paramètres d'étalonnage des couleurs pondérés associés à l'opération d'étalonnage des couleurs respective dans l'ensemble de trames exemplaires ;

   l'application, pour produire une image à couleurs étalonnées, de la pluralité d'opérations d'étalonnage des couleurs à l'image source en utilisant chacune des moyennes des réglages de paramètres d'étalonnage des couleurs pondérés comme paramètre d'entrée de son opération d'étalonnage des couleurs associée ; et

   la fourniture de l'image à couleurs étalonnées.

2. Procédé selon la revendication 1, étant configuré d'au moins une des manières suivantes :

   dans lequel la pluralité d'opérations d'étalonnage des couleurs comprend une opération d'ajustement de luminance, une opération d'ajustement de teinte et une opération d'ajustement de saturation ;

   dans lequel la pluralité d'opérations d'étalonnage des couleurs comprend une opération d'ajustement de luminance globale, une opération d'ajustement de teinte globale et une opération d'ajustement de saturation globale ; ou

   dans lequel la pluralité d'opérations d'étalonnage des couleurs comprend au moins une opération d'ajustement de luminance régionale, au moins une opération d'ajustement de teinte régionale et au moins une opération d'ajustement de saturation régionale.

3. Procédé selon la revendication 1 ou 2, étant configuré d'au moins une des manières suivantes :

   dans lequel l'obtention de la pluralité de mesures de similarité comprend :
   le calcul d'une pluralité de structures de données, dans lequel chaque structure de données est associée à une différente parmi l'image source et les trames exemplaires de l'ensemble de trames exemplaires et dans lequel chaque structure de données présente une pluralité de compartiments, chaque compartiment étant associé à une plage unique de valeurs de chromaticité et à une plage unique de valeurs de luminance et chaque compartiment incluant un compte du nombre de pixels dans l'image associée à cette structure de données qui présent des valeurs de chromaticité dans la plage de valeurs de chromaticité associée à ce compartiment et qui présentent également des valeurs de luminance dans la plage de valeurs de luminance associée à ce compartiment ;

   dans lequel chaque trame exemplaire de l'ensemble de trames exemplaires et l'image source sont codées avec une fonction de transfert qui couvre une plage de luminance de X nits dans une profondeur de Y bits et dans lequel les compartiments des structures de données couvrent la plage de luminance de X nits dans une profondeur de Z bits, où Z n'est pas supérieur à la moitié de Y ;

   dans lequel chaque trame exemplaire de l'ensemble de trames exemplaires et l'image source sont codées avec une fonction de transfert avec des valeurs de chromaticité qui couvrent un espace colorimétrique donné dans une profondeur de Y bits et dans lequel les compartiments des structures de données couvrent l'espace colorimétrique donné dans une profondeur de Z bits, où Z est supérieur à la moitié de Y ;

   dans lequel le calcul de la pluralité de structures de données comprend en outre le sous-échantillonnage de l'image source avant le calcul de la structure de données associée à l'image source et le sous-échantillonnage des trames exemplaires de l'ensemble de trames exemplaires avant le calcul des structures de données associées à l'image source ;

dans lequel l'obtention de la pluralité de mesures de similarité comprend en outre l'identification de chevauchements entre la structure de données associée à l'image source et les structures de données associées aux trames exemplaires ; ou

dans lequel l'obtention de la pluralité de mesures de similarité comprend en outre :

l'identification de chevauchements entre la structure de données associée à l'image source et les structures de données associées aux trames exemplaires ;

la division de chaque trame exemplaire de l'ensemble de trames exemplaires et de l'image source en une pluralité de bandes horizontales ;

l'obtention de moyennes et d'écarts types de luminance dans chacune des bandes horizontales ;

le calcul de chevauchements de distributions normales des moyennes et écarts types de luminance obtenus dans chacune des bandes horizontales ; et

le calcul des mesures de similarité en combinant une première métrique basée sur les chevauchements identifiés entre la structure de données associée à l'image source et les structures de données associées aux trames exemplaires conjointement avec une seconde métrique basée sur les chevauchements calculés de distributions normales.

4. Procédé selon l'une quelconque des revendications 1 à 3, dans lequel l'obtention de la pluralité de mesures de similarité comprend en outre :

la division de chaque trame exemplaire de l'ensemble de trames exemplaires et de l'image source en une pluralité de bandes horizontales ;

l'obtention de moyennes et d'écarts types de luminance dans chacune des bandes horizontales ; et

le calcul de chevauchements de distributions normales des moyennes et écarts types de luminance obtenus dans chacune des bandes horizontales.

5. Procédé selon l'une quelconque des revendications 1 à 4, comprenant en outre la détermination de l'ensemble de trames exemplaires, la détermination comprenant :

l'obtention d'une séquence de trames d'image ;

l'obtention d'une pluralité de mesures de similarité, chaque mesure de similarité indiquant un niveau de similarité entre une paire de trames d'image respective différente de la séquence de trames d'image ; et

la sélection, dans la séquence de trames d'image, d'un ensemble de trames exemplaires, en :

(i) ajoutant, à l'ensemble de trames exemplaires, une première trame d'image de la séquence de trames d'image ;

(ii) identifiant, parmi les trames d'image non encore ajoutées à l'ensemble de trames exemplaires, la trame d'image qui est la moins similaire, selon les mesures de similarité, aux une ou plusieurs trames d'image dans l'ensemble de trames exemplaires ;

(iii) ajoutant, à l'ensemble de trames exemplaires, la trame d'image identifiée en (ii) ; et

(iv) répétant (ii) et (iii) jusqu'à ce qu'une condition d'achèvement soit satisfaite ;

dans lequel la pluralité de réglages de paramètres d'étalonnage des couleurs pour chaque trame exemplaire dans l'ensemble de trames exemplaires est obtenue une fois la condition d'achèvement satisfaite.

6. Procédé selon la revendication 5, étant configuré d'au moins une des manières suivantes :

dans lequel la répétition de (ii) et (iii) jusqu'à ce que la condition d'achèvement soit satisfaite comprend la répétition de (ii) et (iii) jusqu'à ce qu'il y ait au moins un nombre prédéterminé de trames exemplaires ajoutées à l'ensemble de trames exemplaires ;

dans lequel la répétition de (ii) et (iii) jusqu'à ce que la condition d'achèvement soit satisfaite comprend la répétition de (ii) et (iii) jusqu'à ce que la trame d'image identifiée en (ii) présente une mesure de similarité avec une trame d'image déjà ajoutée à l'ensemble de trames exemplaires qui est supérieure à un seuil prédéterminé ;

dans lequel l'ajout, à l'ensemble de trames exemplaires, de la première trame d'image de la séquence de trames d'image comprend l'ajout, à l'ensemble de trames exemplaires, d'une trame sélectionnée au hasard dans la séquence de trames d'image ;

dans lequel l'ajout, à l'ensemble de trames exemplaires, de la première trame d'image de la séquence de trames d'image comprend l'ajout, à l'ensemble de trames exemplaires, d'une trame la plus moyenne de la séquence de trames d'image ; ou

dans lequel (ii) l'identification, parmi les trames d'image non encore ajoutées à l'ensemble de trames exemplaires, de la trame d'image la moins similaire, selon les mesures de similarité, aux une ou plusieurs trames d'image dans l'ensemble de trames exemplaires comprend l'identification, parmi les trames d'image non encore ajoutées à l'ensemble de trames exemplaires, de la trame d'image qui présente la plus petite similarité maximale par rapport à l'une quelconque des une ou plusieurs trames d'image dans l'ensemble de trames exemplaires.

7. Procédé selon la revendication 5 ou 6, dans lequel l'obtention de la pluralité de mesures de similarité comprend le calcul d'un vecteur caractéristique pour chaque trame d'image dans la séquence de trames d'image.

8. Procédé selon la revendication 7, dans lequel le calcul du vecteur caractéristique d'une trame d'image donnée comprend :

le sous-échantillonnage de l'image donnée pour produire une image sous-échantillonnée présentant une résolution inférieure à celle de l'image donnée ; et
le calcul d'une luminosité moyenne et d'un écart type de la luminosité pour une pluralité de zones horizontales de l'image sous-échantillonnée.

9. Procédé selon la revendication 7, dans lequel les trames d'image sont codées avec une fonction de transfert présentant une plage de luminance qui est codée avec X bits et présentant au moins deux paramètres de chromaticité, chacun codé avec Y bits, et dans lequel le calcul du vecteur caractéristique d'une trame d'image donnée comprend :

le sous-échantillonnage de l'image donnée pour produire une image sous-échantillonnée présentant une résolution inférieure à celle de l'image donnée ;
le calcul d'une luminosité moyenne et d'un écart type de la luminosité pour une pluralité de zones horizontales de l'image sous-échantillonnée ; et
le calcul d'une structure de données à partir de l'image sous-échantillonnée, dans lequel la structure de données inclut une pluralité de compartiments, dans lequel la plage de luminance de la fonction de transfert est codée avec A bits dans la structure de données, dans lequel les au moins deux paramètres de chromaticité sont codés avec B bits dans la structure de données, dans lequel A est inférieur à X et B est inférieur à Y, et dans lequel le calcul de la structure de données comprend le comptage du nombre de pixels de l'image sous-échantillonnée associée à chaque compartiment.

10. Procédé selon la revendication 5, comprenant en outre :

l'obtention d'une image source pour l'étalonnage des couleurs ;
le calcul d'une pluralité de mesures de similarité supplémentaires, chaque mesure de similarité supplémentaire indiquant un niveau de similarité entre l'image source et une trame exemplaire respective différente de l'ensemble de trames exemplaires ;
le calcul d'une moyenne pondérée basée sur la pluralité de mesures de similarité et les réglages de paramètres d'étalonnage des couleurs associés aux trames exemplaires dans l'ensemble de trames exemplaires ;
l'application, pour produire une image à couleurs étalonnées, de l'opération d'étalonnage des couleurs à l'image source en utilisant la moyenne pondérée comme paramètre d'entrée de l'opération d'étalonnage des couleurs ; et
la fourniture de l'image à couleurs étalonnées.

11. Produit de programme informatique présentant des instructions qui, lorsqu'elles sont exécutées par un système informatique, amènent ledit système informatique à exécuter le procédé selon l'une quelconque des revendications 1 à 10.

12. Système d'étalonnage des couleurs comprenant :
au moins un dispositif de commande configuré pour réaliser le procédé selon l'une quelconque des revendications 1 à 10.

13. Système selon la revendication 12, comprenant en outre un écran, dans lequel le au moins un dispositif de commande est configuré pour fournir l'image à couleurs étalonnées à l'écran et dans lequel l'écran est configuré pour afficher l'image à couleurs étalonnées.

**14.** Système selon la revendication 13, dans lequel l'image source comprend du contenu en direct et dans lequel le au moins un dispositif de commande est configuré pour fournir l'image à couleurs étalonnées à l'écran dans les 200 millisecondes suivant l'obtention de l'image source.

**15.** Système selon l'une quelconque des revendications 12 à 14, dans lequel le au moins un dispositif de commande est configuré pour obtenir la pluralité de réglages de paramètres d'étalonnage des couleurs avant la création de l'image source.

FIG. 1

200

```
┌─────────────────────────┐
│   OBTAIN RAW VIDEO DATA  │ ⟨ 202
└─────────────────────────┘
            │
            ▼
┌─────────────────────────┐
│   OBTAIN COLOR-GRADING   │ ⟨ 204
│     PARAMETERS AND       │
│     EXEMPLAR FRAMES      │
└─────────────────────────┘
            │
            ▼
┌─────────────────────────┐
│  DETERMINE SIMILARITIES  │ ⟨ 206
│  BETWEEN FRAMES OF THE   │
│  RAW VIDEO DATA AND THE  │
│     EXEMPLAR FRAMES      │
└─────────────────────────┘
            │
            ▼
┌─────────────────────────┐
│    DETERMINE COLOR-      │ ⟨ 208
│   GRADING PARAMETERS     │
│  FOR THE RAW VIDEO DATA  │
│      BASED ON THE        │
│      SIMILARITIES        │
└─────────────────────────┘
            │
            ▼
┌─────────────────────────┐
│   APPLY COLOR-GRADING    │ ⟨ 210
│  PARAMETERS TO THE RAW   │
│        VIDEO DATA        │
└─────────────────────────┘
            │
            ▼
┌─────────────────────────┐
│    DISTRIBUTE COLOR-     │ ⟨ 212
│    GRADED VIDEO DATA     │
└─────────────────────────┘
```

## FIG. 2

300

OBTAIN RAW EXEMPLAR
VIDEO DATA — 302

DETERMINE
CHARACTERISITIC
VECTORS FOR THE RAW
EXEMPLAR FRAMES — 304

DETERMINE SIMILARITY
VALUES BETWEEN RAW
EXEMPLAR FRAMES — 306

IDENTIFY A MODE
EXEMPLAR FRAME — 308

312

IDENTIFY A LEAST SIMILAR
EXMPLAR FRAME — 310

OBTAIN COLOR-GRADING
PARAMETERS FOR
EXEMPLAR FRAMES — 314

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63391528

- EP 22197590

**Non-patent literature cited in the description**

- **N. BONNEEL et al.** Example-based video color grading. *ACM Transactions on Graphics*, 01 July 2013, vol. 32 (4), ISSN 0730-0301

- **XUE S et al.** Learning and Applying Color Styles From Feature Films. *Computer Graphics Forum: Journal of the European Association for Computer Graphics*, 25 November 2013, vol. 32 (7), 255-263